# FASCICULE DE BREVET EUROPEEN

(11) **EP 2 163 462 B1**
(45) Date de publication et mention de la délivrance du brevet: **19.01.2011**
(21) Numéro de dépôt: 09165970.6
(22) Date de dépôt: 21.07.2009
(51) Int. Cl.: B62D 65/06

(54) **Dispositif et procédé de montage d'un volet arrière dans l'ouverture arrière d'un véhicule automobile**
Montagevorrichtung und -verfahren für die Heckklappe in der hinteren Öffnung eines Kraftfahrzeugs
Device and method for installing a rear tailgate in the rear opening of an automobile

(30) Priorité: 11.09.2008 FR 0856100
(43) Date de publication de la demande: 17.03.2010
(73) Titulaire: Peugeot Citroën Automobiles SA, 78140 Vélizy-Villacoublay (FR)
(72) Inventeur: Hasnaoui, Farid, 90400, TREVENANS (FR); Laviolette, Julien, 78330, FONTENAY-LE-FLEURY (FR)
(74) Mandataire: Allain, Laurent

(56) Documents cités:
- DE-B3-102005 003 935
- FR-A- 2 826 393
- US-B1- 6 349 480

## Description

La présente invention concerne un dispositif pour faciliter le montage d'un volet arrière de véhicule automobile et régler la position de ce volet dans l'ouverture arrière de la caisse du véhicule. Le document DE 10 2005 00 3935 décrit un dispositif selon le préambule de la revendication 1.

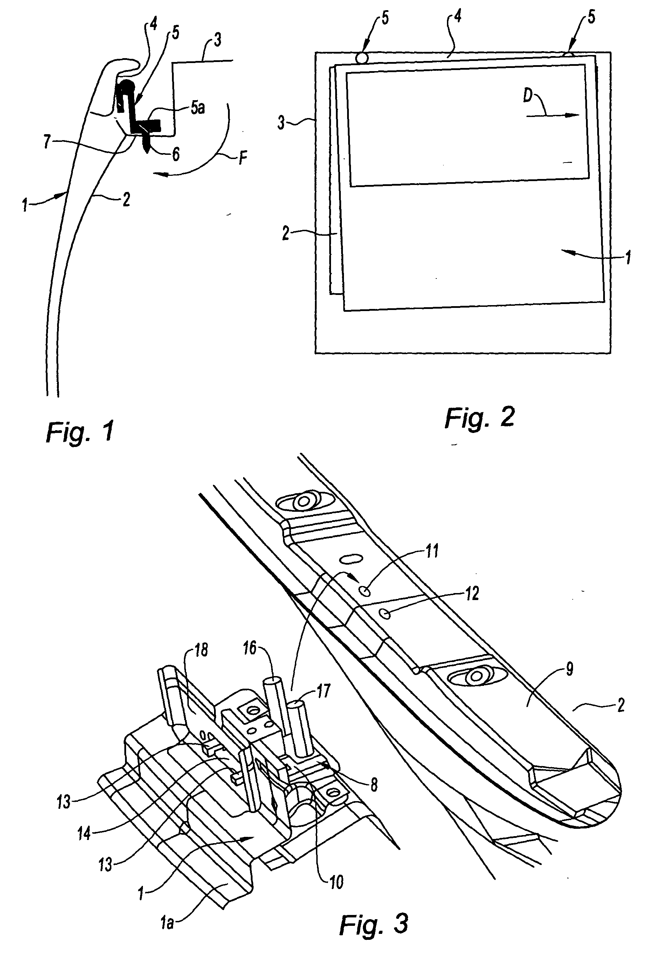

Les figures 1 et 2 représentent respectivement en coupe et en plan le volet arrière 1 d'un véhicule automobile en position sur l'ouverture arrière 2 de la caisse 3 de ce véhicule.

Le bord supérieur 4 du volet arrière 1 comporte deux charnières 5 permettant le pivotement du volet entre les positions d'ouverture et de fermeture.

Chacune des articulations 5 comporte une partie mobile 5a (voir figure 1) destinée à être fixée au moyen d'une vis 6 sur le bord supérieur 7 de l'ouverture arrière 2.

Le verrouillage du volet arrière 1 à la caisse du véhicule est réalisé au moyen d'une serrure fixée au volet 1 et d'une gâche fixée sur le bord inférieur de l'ouverture arrière 2.

Cette serrure et cette gâche ne sont pas présentes lors du montage du volet 2, car celles-ci se déformeraient lors du passage en peinture de la caisse qui a lieu après le montage du volet arrière.

On risque ainsi des défauts de montage du volet arrière 1 dans l'ouverture 2 tels qu'illustrés par les figures 1 et 2 résultant du fait que les parties 5a des charnières 5 ne sont pas parfaitement plaquées sur le bord supérieur 7 de l'ouverture 2.

La figure 1 montre un défaut de positionnement du à une rotation dans le sens de la flèche F autour de l'axe transversal Y du véhicule et la figure 2 montre un défaut de positionnement se traduisant par une déviation dans le sens de la flèche D par rapport à l'axe vertical Z.

Les défauts ci-dessus ont pour effet que les exigences en matière de jeux et d'affleurements ne sont pas respectées et nuisent donc à la qualité de la fabrication.

Le document FR 2 773 838 décrit un dispositif de fermeture provisoire d'ouvrants de véhicule, avant le passage en peinture, comportant un élément fixe fixé à la place de la gâche et un élément mobile fixé à la place de la serrure sur l'ouvrant.

Cependant ce dispositif ne sert pas à faciliter le montage et le réglage de l'ouvrant dans l'ouverture de la caisse du véhicule.

Le but de la présente invention est de créer un tel dispositif en vue de remédier aux défauts évoqués plus haut.

Ce but est atteint, selon l'invention grâce à un dispositif pour faciliter le montage d'un volet arrière de véhicule automobile et régler la position de ce volet dans l'ouverture arrière de la caisse du véhicule, ce volet comportant près de son bord inférieur un trou qui est normalement prévu pour la serrure de ce volet, **caractérisé en ce qu**'il comprend une fausse gâche adaptée pour être fixée de façon amovible sur le bord inférieur de ladite ouverture arrière à l'emplacement de la vraie gâche, cette fausse gâche comportant une embase rigide pouvant être fixée sur le bord inférieur de ladite ouverture arrière grâce à des trous d'indexation et une partie faisant saillie dans une direction sensiblement perpendiculaire à la direction de fixation de l'embase sur ledit bord inférieur, cette partie pouvant s'engager sensiblement sans jeu dans le trou réalisé près du bord inférieur du volet arrière, de façon à définir une position géométrique prédéterminée du volet par rapport à la caisse du véhicule.

Ainsi, lorsque le trou prévu normalement pour la serrure du volet arrière est engagé sur la partie en saillie correspondante de l'embase de la fausse gâche, la position géométrique du volet est parfaitement définie et la fixation définitive du volet dans l'ouverture correspondante peut être effectuée sans risque de défauts dus à une rotation ou à une déviation du volet par rapport à la caisse.

Dans un mode de réalisation préféré de l'invention, l'embase est une plaquette comportant sur l'une de ses faces deux nervures destinées à prendre appui sur ledit bord inférieur respectivement de part et d'autre desdits trous d'indexation.

De préférence également, l'autre face de la plaquette porte ladite partie faisant saillie, cette partie faisant saillie par rapport à cette face et par rapport à un bord de la plaquette de façon à pouvoir s'engager dans ledit trou du volet arrière.

Dans un mode de réalisation particulièrement avantageux de l'invention, ledit bord de la plaquette porte une équerre adaptée pour s'appuyer sur le bord inférieur de l'ouverture arrière du véhicule.

Cette équerre permet d'assurer une fixation optimale de la plaquette au bord inférieur de l'ouverture arrière du véhicule.

La partie faisant saillie dans une direction sensiblement perpendiculaire à la direction de fixation de l'embase peut être constituée par deux doigts séparés ou par une avancée élargie monobloc.

De préférence également, ladite autre face de la plaquette porte une poignée de préhension de la fausse gâche, cette poignée s'étendant à l'intérieur du véhicule lorsque le volet arrière est en position dans l'ouverture arrière de la caisse du véhicule.

Cette poignée facilite la préhension de la fausse gâche et sa mise en place par l'opérateur sur le bord inférieur de l'ouverture arrière du véhicule.

Selon un autre aspect, l'invention concerne également un procédé de montage d'un volet arrière de véhicule automobile dans l'ouverture arrière de la caisse du véhicule, ce volet arrière comportant deux charnières fixées à son bord supérieur, chaque charnière comportant une partie mobile destinée à être fixée au moyen de vis sur un bord supérieur de l'ouverture arrière de la caisse, le volet comportant en outre un trou situé près de son bord inférieur prévu pour la serrure de ce volet, caractérisé par les étapes suivantes :
- on fixe sur des trous d'indexation prévus sur le bord inférieur de l'ouverture de la caisse la fausse gâche d'un dispositif selon l'invention,
- on place le volet arrière dans l'ouverture de la caisse, de telle sorte que la partie mobile de chaque charnière soit en appui sur le bord supérieur de l'ouverture arrière de la caisse et que la partie faisant saillie de l'embase de la fausse gâche soit engagée dans le trou situé près du bord inférieur du volet arrière et,
- on serre les vis de fixation des parties mobiles des charnières.

D'autres particularités et avantages de l'invention apparaîtront encore tout au long de la description ci-après.

Aux dessins annexés, donnés à titre d'exemples, non limitatifs :
- la figure 3 est une vue en perspective montrant d'une part la fausse gâche du dispositif selon l'invention en position d'engagement par rapport à un trou du bord inférieur du volet arrière (représenté en partie) et d'autre part le bord inférieur de l'ouverture arrière d'un véhicule,
- la figure 4 est une vue en perspective d'un autre mode de réalisation de la fausse gâche du dispositif selon l'invention fixé sur le bord inférieur de l'ouverture arrière d'un véhicule,
- la figure 5 est une vue en plan montrant le trou prévu pour la serrure sur le bord inférieur du volet arrière,
- la figure 6 est une vue en coupe analogue à la figure 1, la fausse gâche du dispositif selon l'invention étant en place,
- la figure 7 est une vue analogue à la figure 2, la fausse gâche du dispositif selon l'invention étant en place.

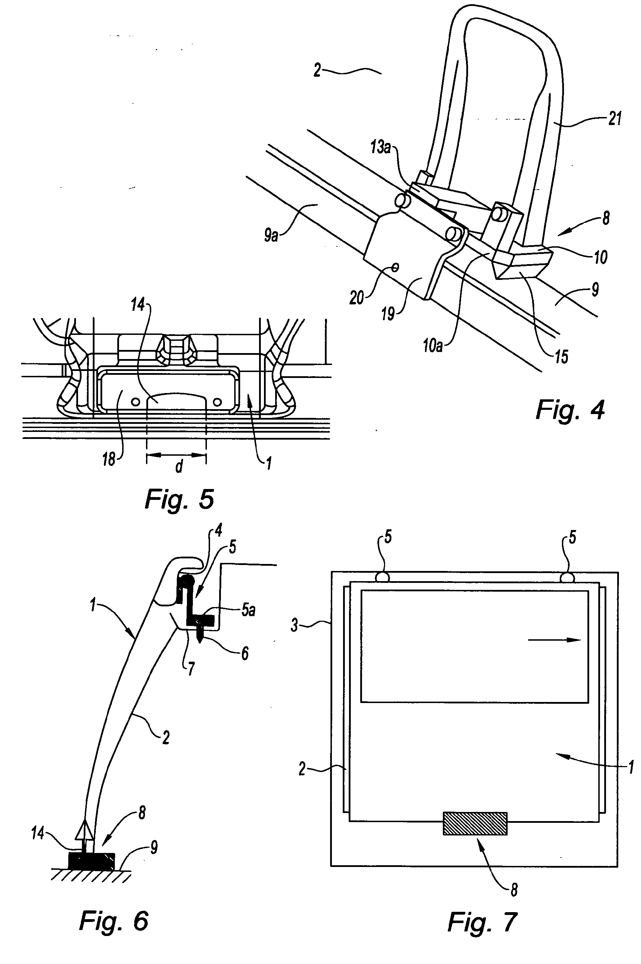

Les figures 3 et 4 représentent un dispositif pour faciliter le montage d'un volet arrière 1 tel que montré sur les figures 1, 2 et 6, 7 et régler la position de ce volet 1 dans l'ouverture arrière 2 de la caisse 3 d'un véhicule automobile.

Ce dispositif comprend une fausse gâche 8 adaptée pour être fixée de façon amovible sur le bord inférieur 9 de l'ouverture arrière 2 à l'emplacement de la vraie gâche.

Cette fausse gâche 8 comporte une embase rigide 10 en métal ou en matière plastique pouvant être fixée sur le bord inférieur 9 grâce à des trous d'indexation 11, 13 prévus sur ce bord inférieur 9, comme montré sur la figure 3.

Cette figure 3 montre également que la fausse gâche 8 comporte deux doigts 13 séparés faisant saillie dans une direction sensiblement perpendiculaire à la direction de fixation de l'embase 10 sur le bord inférieur 9 de l'ouverture.

Comme montré sur la figure 3, ces deux doigts 13 sont engagés sensiblement sans jeu dans un trou 14 réalisé près du bord inférieur 1a du volet 1.

L'engagement de ces doigts 13 dans le trou 14 permet de définir une position géométrique prédéterminée et précise du volet 1 par rapport à la caisse du véhicule.

Ce trou 14 est normalement prévu pour recevoir ultérieurement la serrure du volet 1.

Dans l'exemple montré sur la figure 3, le trou 14 est formé sur une tôle de renfort 18 de la doublure du volet 1.

Par ailleurs, l'embase 10 comporte deux vis 16, 17 pouvant se visser dans les trous d'indexation 11 et 12 pour fixer l'embase 10 sur le bord inférieur 9 de l'ouverture 2.

Dans l'exemple représenté sur la figure 4, l'embase est constituée par une plaquette 10 comportant sur sa face inférieure deux nervures 15 destinées à prendre appui sur le bord inférieur 9 de l'ouverture 2 respectivement de part et d'autre des trous d'indexation 11 et 12 montrés sur la figure 3.

Dans cet exemple, la partie en saillie pouvant s'engager dans le trou 14 du volet 1 est une avancée monobloc 13a faisant saillie sur la face supérieure de l'embase 10 et par rapport au bord arrière 10a de celle-ci pour que l'avancée 13a puisse effectivement s'engager dans le trou 14.

Dans l'exemple de la figure 4, le bord 10a de la plaquette 10 constituant l'embase porte une équerre 19 adaptée pour s'appuyer sur le bord inférieur 9 de l'ouverture arrière 2 du véhicule.

Cette équerre porte une vis 20 permettant de fixer l'équerre 19 sur la face latérale 9a du bord inférieur 9.

Par ailleurs, la face supérieure de la plaquette 10 porte une poignée 21 de préhension de la fausse gâche 9.

Cette poignée 21 s'étend à l'intérieur du véhicule lorsque le volet arrière 1 est en position dans l'ouverture arrière 2 de la caisse du véhicule.

La figure 5 montre que le trou 14 pratiqué dans le volet 1 présente une largeur d.

Cette largeur d correspond à la largeur de l'avancée 13a montrée sur la figure 4 ou à la distance comprise entre les bords extérieurs des deux doigts 13 représentés sur la figure 3.

On va maintenant décrire en référence aux figures 6 et 7, le procédé de montage d'un volet arrière 1 dans l'ouverture arrière de la caisse d'un véhicule automobile.

Comme décrit au début, le volet arrière 1 comporte deux charnières 5 fixées à son bord supérieur 4.

Chaque charnière 5 comporte une partie 5a mobile par rapport à l'axe de rotation destinée à être fixée au moyen d'une vis 6 sur un bord supérieur 7 de l'ouverture arrière 2 de la caisse.

Le volet 1 comporte en outre un trou 14 situé près de son bord inférieur, prévu pour la serrure de ce volet.

Le procédé de montage comprend les étapes suivantes.

On fixe sur des trous d'indexation 11, 12 prévus sur le bord inférieur 9 de l'ouverture 2 de la caisse une fausse gâche 8, telle que décrite en référence aux figures 3 et 4.

On place ensuite le volet arrière 1 dans l'ouverture 2 de la caisse, de telle sorte que la partie mobile 5a de chaque charnière 5 soit en appui, c'est-à-dire plaquée sur le bord supérieur 7 de l'ouverture arrière 2 de la caisse et que les doigts 13 ou l'avancée 13a faisant saillie de l'embase 10 de la fausse gâche soit engagés dans le trou 14 situé près du bord inférieur du volet arrière 1.

Il suffit ensuite de visser les vis de fixation 6 des parties mobiles 5a des charnières pour serrer celles-ci sur le bord 7 de la caisse du véhicule.

Les avantages de ce procédé de montage sont les suivants.

L'engagement des doigts en saillie 13 ou de l'avancée 13a de la fausse gâche 8 dans le trou 14 du volet arrière 1 permet d'une part de définir parfaitement la position du volet par rapport à l'axe Y transversal de la caisse et par rapport à l'axe vertical Z et d'autre part de plaquer la partie mobile 5a de chaque charnière sur le bord supérieur 7 de la caisse étant donné que la fausse gâche 8 supporte la masse du volet.

Ainsi, on évite tout risque de rotation de la partie mobile 5a de la charnière telle que montrée sur la figure 1 ou tout risque de déviation du volet telle que montrée sur la figure 2, avant ou pendant le vissage des vis de fixation.

Par conséquent, le procédé selon l'invention permet grâce à la fausse gâche 8 de respecter les tolérances concernant les jeux et affleurements entre le volet et la caisse du véhicule.

## Revendications

1. Dispositif pour faciliter le montage d'un volet arrière (1) de véhicule automobile et régler la position de ce volet dans l'ouverture arrière (2) de la caisse du véhicule, ce volet (1) comportant près de son bord inférieur un trou (14) qui est normalement prévu pour la serrure de ce volet (1), **caractérisé en ce qu'**il comprend une fausse gâche (8) adaptée pour être fixée de façon amovible sur le bord inférieur (9) de ladite ouverture arrière (2) à l'emplacement de la vraie gâche, cette fausse gâche (8) comportant une embase rigide (10) pouvant être fixée sur le bord inférieur (9) de ladite ouverture arrière (2) grâce à des trous d'indexation (11, 12) et une partie (13, 13a) faisant saillie dans une direction sensiblement perpendiculaire à la direction de fixation de l'embase (10) sur ledit bord inférieur (9), cette partie (13, 13a) pouvant s'engager sensiblement sans jeu dans le trou (14) réalisé près du bord inférieur du volet arrière (1), de façon à définir une position géométrique prédéterminée du volet (1) par rapport à la caisse du véhicule.

2. Dispositif selon la revendication 1, **caractérisé en ce que** l'embase (10) est une plaquette comportant sur l'une de ses faces deux nervures (15) destinées à prendre appui sur ledit bord inférieur (9) respectivement de part et d'autre desdits trous d'indexation (11, 12).

3. Dispositif selon la revendication 2, **caractérisé en ce que** l'autre face de la plaquette (10) porte ladite partie faisant saillie (13, 13a), cette partie faisant saillie par rapport à cette face et par rapport à un bord (10a) de la plaquette (10) de façon à pouvoir s'engager dans ledit trou (14) du volet arrière (1).

4. Dispositif selon la revendication 3, **caractérisé en ce que** ledit bord (10a) de la plaquette porte une équerre (19) adaptée pour s'appuyer sur le bord inférieur (9) de l'ouverture arrière (2) du véhicule.

5. Dispositif selon l'une des revendications 1 à 4, **caractérisé en ce que** ladite partie en saillie est constituée par deux doigts séparés (13).

6. Dispositif selon l'une des revendications 1 à 4, **caractérisé en ce que** ladite partie en saillie est constituée par une avancée élargie (13a) monobloc.

7. Dispositif selon l'une des revendications 3 à 6, **caractérisé en ce que** ladite autre face de la plaquette (10) porte une poignée (21) de préhension de la fausse gâche (8), cette poignée (21) s'étendant à l'intérieur du véhicule lorsque le volet arrière (1) est en position dans l'ouverture arrière (2) de la caisse du véhicule.

8. Procédé de montage d'un volet arrière (1) de véhicule automobile dans l'ouverture arrière (2) de la caisse du véhicule, ce volet arrière (1) comportant deux charnières (5) fixées à son bord supérieur (4), chaque charnière (5) comportant une partie mobile (5a) destinée à être fixée au moyen de vis (6) sur un bord supérieur (7) de l'ouverture arrière (2) de la caisse, le volet (1) comportant en outre un trou (14) situé près de son bord inférieur prévu pour la serrure de ce volet, **caractérisé par** les étapes suivantes :
- on fixe au moyen des trous d'indexation (11, 12) prévus sur le bord inférieur (9) de l'ouverture (2) de la caisse, la fausse gâche (8) d'un dispositif selon l'une des revendications 1 à 7,
- on place le volet arrière (1) dans l'ouverture (2) de la caisse, de telle sorte que la partie mobile (5a) de chaque charnière soit en appui sur le bord supérieur (7) de l'ouverture arrière (2) de la caisse et que la partie (13, 13a) faisant saillie de l'embase (10) de la fausse gâche (8) soit engagée dans le trou (14) situé près du bord inférieur du volet arrière (1) et,
- on serre les vis de fixation (6) des parties mobiles (5a) des charnières (5).

## Claims

1. Device for facilitating the installation of a rear flap (1) of a motor vehicle and adjusting the position of this flap in the rear opening (2) of the body shell of the vehicle, this flap (1) comprising, close to its lower edge, a hole (14) which is normally provided for the lock of this flap (1), **characterised in that** it comprises a mock strike plate (8) which can be detachably fixed to the lower edge (9) of said rear opening (2) in the place of the true strike plate, this mock strike plate (8) comprising a rigid base (10) which can be fixed to the lower edge (9) of said rear opening (2) by means of indexing holes (11, 12) and a part (13, 13a) which projects in a direction substantially perpendicular to the direction in which the base (10) is fixed to said lower edge (9), this part (13, 13a) being able to engage substantially without play in the hole (14) formed close to the lower edge of the rear flap (1), in such a way as to define a predetermined geometric position of the flap (1) relative to the body shell of the vehicle.

2. Device according to claim 1, **characterised in that** the base (10) is a faceplate comprising on one of its faces two ribs (15) which are intended to bear against said lower edge (9), one on each side of said indexing holes (11, 12).

3. Device according to claim 2, **characterised in that** the other face of the faceplate (10) carries said projecting part (13, 13a), this part projecting relative to this face and relative to an edge (10a) of the faceplate (10) so as to be able to engage in said hole (14) of the rear flap (1).

4. Device according to claim 3, **characterised in that** said edge (10a) of the faceplate carries an angle plate (19) which is adapted to press against the lower edge (9) of the rear opening (2) of the vehicle.

5. Device according to any one of claims 1 to 4, **characterised in that** said projecting part consists of two separate fingers (13).

6. Device according to any one of claims 1 to 4, **characterised in that** said projecting part consists of a one-piece widened extension (13a).

7. Device according to any one of claims 3 to 6, **characterised in that** said other face of the faceplate (10) carries a handle (21) for gripping the mock strike plate (8), this handle (21) extending inside the vehicle when the rear flap (1) is in position in the rear opening (2) of the body shell of the vehicle.

8. Method for installing a rear flap (1) of a motor vehicle in the rear opening (2) of the body shell of the vehicle, this rear flap (1) comprising two hinges (5) fixed to its upper edge (4), each hinge (5) comprising a movable part (5a) which is intended to be fixed by means of screws (6) to an upper edge (7) of the rear opening (2) of the body shell, the flap (1) further comprising a hole (14) located close to its lower edge and provided for the lock of this flap, **characterised by** the following steps:
- the mock strike plate (8) of a device according to any one of claims 1 to 7 is fixed by means of the indexing holes (11, 12) provided on the lower edge (9) of the opening (2) of the body shell,
- the rear flap (1) is placed in the opening (2) of the body shell in such a way that the movable part (5a) of each hinge bears against the upper edge (7) of the rear opening (2) of the body shell and in such a way that the part (13, 13a) projecting from the base (10) of the mock strike plate (8) is engaged in the hole (14) located close to the lower edge of the rear flap (1), and
- the fixing screws (6) for the movable parts (5a) of the hinges (5) are tightened.

## Patentansprüche

1. Vorrichtung zum Erleichtern der Montage einer Kraftfahrzeug-Heckklappe (1) und zum Einstellen der Position dieser Klappe in der hinteren Öffnung (2) der Fahrzeugkarosserie, wobei diese Klappe (1) in der Nähe ihres unteren Randes ein normalerweise für das Schloss dieser Klappe (1) vorgesehenes Loch (14) umfasst, **dadurch gekennzeichnet, dass** sie eine Scheinschließplatte (8) umfasst, die dafür ausgelegt ist, auf dem unteren Rand (9) der hinteren Öffnung (2) an der Stelle der echten Schließplatte auf demontierbare Weise befestigt zu werden, wobei diese Scheinschließplatte (8) ein steifes Basisteil (10) umfasst, das sich auf dem unteren Rand (9) der hinteren Öffnung (2) befestigen lässt, anhand von Indexierbohrungen (11, 12) und eines Teils (13, 13a), der in einer zur Befestigungsrichtung des Basisteils (10) auf dem unteren Rand (9) im Wesentlichen senkrechten Richtung vorsteht, wobei dieser Teil (13, 13a) im Wesentlichen spielfrei in das Loch (14) eingreifen kann, das in der Nähe des unteren Randes der Heckklappe (1) so ausgeführt ist, dass eine vorher festgelegte geometrische Position der Klappe (1) bezogen auf die Fahrzeugkarosserie definiert wird.

2. Vorrichtung nach Anspruch 1, **dadurch gekennzeichnet, dass** das Basisteil (10) ein Plättchen ist, das auf eines seiner zwei Seiten zwei Rippen (15) umfasst, die dafür bestimmt sind, auf dem unteren Rand (9) auf einer jeweiligen Seite der Indexierbohrungen (11, 12) zur Anlage zu kommen.

3. Vorrichtung nach Anspruch 2, **dadurch gekennzeichnet, dass** die andere Seite des Plättchens (10) den vorstehenden Teil (13, 13a) trägt, wobei dieser Teil bezogen auf diese Seite und bezogen auf einen Rand (10a) des Plättchens (10) so vorsteht, dass er in das Loch (14) der Heckklappe (1) eingreifen kann.

4. Vorrichtung nach Anspruch 3, **dadurch gekennzeichnet, dass** der Rand (10a) des Plättchens ein Winkelband (19) trägt, das dafür ausgelegt ist, sich auf dem unteren Rand (9) der hinteren Öffnung (2) des Fahrzeugs abzustützen.

5. Vorrichtung nach einem der Ansprüche 1 bis 4, **dadurch gekennzeichnet, dass** der überstehende Teil aus zwei getrennten Fingern (13) besteht.

6. Vorrichtung nach einem der Ansprüche 1 bis 4, **dadurch gekennzeichnet, dass** der überstehende Teil aus einem einstückigen verbreiterten Vorsprung (13a) besteht.

7. Vorrichtung nach einem der Ansprüche 3 bis 6, **dadurch gekennzeichnet, dass** die andere Seite des Plättchens (10) einen Griff (21) zum Greifen der Scheinschließplatte (8) trägt, wobei dieser Griff (21) sich innerhalb des Fahrzeugs erstreckt, wenn sich die Heckklappe (1) in ihrer Position in der hinteren Öffnung (2) der Fahrzeugkarosserie befindet.

8. Verfahren für die Montage einer Kraftfahrzeug-Heckklappe (1) in der hinteren Öffnung (2) der Fahrzeugkarosserie, wobei diese Heckklappe (1) zwei Scharniere (5) umfasst, die an ihrem oberen Rand (4) befestigt sind, wobei jedes Scharnier (5) einen beweglichen Teil (5a) umfasst, der dafür bestimmt ist, mittels Schrauben (6) auf dem oberen Rand (7) der hinteren Öffnung (2) der Karosserie befestigt zu werden, wobei die Klappe (1) außerdem ein für das Schloss dieser Klappe vorgesehenes Loch (14) umfasst, das sich in der Nähe ihres unteren Randes befindet, **gekennzeichnet durch** die folgenden Schritte:
- Befestigen mittels der Indexierbohrungen (11, 12), die auf dem unteren Rand (9) der Öffnung (2) der Karosserie vorgesehen sind, der Scheinschließplatte (8) einer Vorrichtung nach einem der Ansprüche 1 bis 7,
- Einsetzen der Heckklappe (1) in die Öffnung (2) der Karosserie, so dass der bewegliche Teil (5a) jedes Scharniers an dem oberen Rand (7) der hinteren Öffnung (2) der Karosserie anliegt und dass der vorstehende Teil (13, 13a) des Basisteils (10) der Scheinschließplatte (8) in das sich in der Nähe des unteren Randes der Heckklappe (1) befindlichen Lochs (14) eingreift, und
- Anziehen der Befestigungsschrauben (6) für die beweglichen Teile (5a) der Scharniere (5).
